Europäisches Patentamt

(19) European Patent Office

Office européen des brevets

(11) Numéro de publication: **0 008 971**
A1

## (12) DEMANDE DE BREVET EUROPEEN

(21) Numéro de dépôt: **79400569.4**

(22) Date de dépôt: **13.08.79**

(51) Int. Cl.³: **C 08 L 101/00**

---

(30) Priorité: **23.08.78 FR 7824504**
**09.07.79 FR 7917775**

(43) Date de publication de la demande:
**19.03.80 Bulletin 80 6**

(84) Etats Contractants Désignés:
**DE GB IT NL SE**

(71) Demandeur: **SOCIETE DES ADHESIFS DE BELLEGARDE-AIN(SABA) (Société Anonyme)**
**19, rue de Savoie**
**F-01201 Bellegarde(FR)**

㉒(72) Inventeur: **Lefevre, François**
**48 bis, rue des Belles Feuilles**
**F-75016 Paris(FR)**

㉔(74) Mandataire: **Netter, André**
**40, rue Vignon**
**F-75009 Paris(FR)**

---

(54) **Feuille composite adhésive et son procédé d'utilisation.**

(57) Feuille composite comprenant un support dont au moins une face est revêtue d'une couche adhésive.

Le support ainsi la (ou les) couche(s) adhésive(s) présentent une propriété de déformabilité à l'extention permettant à la feuille d'épouser des contours galbés sans que ses qualités soient altérées.

Une telle feuille composite sert à rendre adhésive des surfaces de forme complexe ou à assembler différents matériaux destinés à la fabrication de pièces par thermoformage.

Fig.4

EP 0 008 971 A1

Les feuilles composites autocollantes sont utilisées soit pour rendre autocollants des matériaux ou objets à face plane et/ou pour contrecoller entre eux des matériaux à face plane non destinés à subir de déformation, soit encore pour apposer sur une surface plane une feuille décorative constituée par la feuille composite elle-même.

Dans le premier cas, elles comportent un support en papier ou textile ou matière plastique, deux couches d'adhésif autocollant recouvrant les deux faces du support et un protecteur détachable habituellement siliconé sur les deux faces.

Dans le deuxième cas d'utilisation, elles comportent un support en papier, textile ou matière plastique, qui constitue la feuille décorative en elle-même, une face dudit support étant munie du motif décoratif tandis que l'autre face est revêtue d'une couche d'adhésif autocollant. Un protecteur détachable, habituellement siliconé, est appliqué sur la face revêtue de l'adhésif autocollant.

Ces feuilles sont ainsi le plus souvent vendues en rouleau et le protecteur siliconé évite le collage de l'une à l'autre des spires successives du rouleau.

De telles feuilles composites autocollantes ne peuvent supporter sans rupture de déformations importantes. En particulier, elles ne peuvent être utilisées pour habiller des pièces déjà formées, tel que des accessoires utilisés dans la construction de véhicules automobiles qui, en général, pour des raisons d'esthétique, sont recouvertes d'un matériau d'habillage.

Actuellement, pour contrecoller un matériau d'habillage à une pièce en matière plastique, on fabrique dans un premier temps la pièce elle-même par toute technique appropriée, par exemple par thermoformage sous vide ou moulage. Pour habiller la pièce ainsi conformée, on applique sur une de ses faces une colle liquide, on pose une plaque en un matériau d'habillage approprié sur la pièce déjà formée et on procède à une nouvelle opération de thermoformage. L'utilisation de ces colles liquides présente des inconvénients, notamment en ce qui concerne la durée de vie en pots des colles, les salissures, la pollution, l'évaporation des solvants utilisés en liaison avec les colles, la main-d'oeuvre très importante que demande

0008971

la mise en oeuvre de cette technique.

L'invention propose d'étendre le domaine d'application des feuilles/composites autocollantes et elle est caractérisée par ce fait qu'elle prévoit l'application d'éléments déformables en tant que constituants d'une telle feuille composite.

Elle prévoit notamment l'application, en tant que support de colle ou adhésif, d'une feuille plastique en pellicule souple comme le polyéthylène ou bien le polypropylène, ou bien le chlorure de polyvinyle ou toute autre matière capable de supporter sans rupture des déformations importantes.

Selon une forme de réalisation, la pellicule est continue, avec ou sans perforations.

Selon une autre réalisation, la matière plastique est utilisée sous forme de fils ou de grille obtenus par un procédé quelconque.

A cet égard, l'invention prévoit l'application, en tant que support de colle ou adhésif, des gazes en fils de matière synthétique utilisées dans le domaine médical ou hygiénique.

Selon l'invention, également, on applique, pour entrer dans la composition d'une feuille composite, des constituants thermodéformables.

La feuille composite selon l'invention est alors bien adaptée pour rendre adhésives les surfaces complexes des objets obtenus par formage à chaud.

Selon l'invention, également, la feuille composite est prévue pour assembler différents matériaux destinés à la fabrication de pièces par thermoformage.

L'invention vise des réalisations dans lesquelles l'adhésivité de la feuille est conférée par un adhésif autocollant.

Elle comprend aussi des réalisations suivant lesquelles l'adhésivité est conférée par un composant thermocollant, comme un vernis, dont la propriété d'adhésivité est développée lors du thermoformage.

Elle comprend aussi les variantes suivant lesquelles l'adhésivité est conférée par un agent autre que la chaleur, notamment un agent chimique.

Dans ces deux derniers cas, la feuille composite est dite "réactivable".

L'invention trouve ici une utilisation particulièrement avantageuse dans le domaine de la fabrication d'accessoires

0008971

utilisés dans la construction de véhicules automobiles, notamment pour habiller ces accessoires (tableaux de bord, garnitures intérieures de portière, etc...).

Avec une feuille composite selon l'invention dont les deux faces sont revêtues d'un vernis thermocollant, de telles pièces peuvent être fabriquées en une seule phase. Pour ce faire, on pose successivement, sur une plaque destinée à constituer après formage la pièce désirée, un film à propriétés de déformabilité à l'extension dont chacune des faces est recouverte d'un vernis thermocollant puis, sur la plaque ainsi revêtue, une feuille en une matière appropriée pour constituer l'habillage de la pièce. L'ensemble est alors thermoformé et, pendant cette opération, le vernis sur chaque face du film réalise l'adhérence définitive de la feuille d'habillage à la plaque constituant la pièce.

Selon une variante, au lieu d'utiliser un film composite dont les deux faces présentent des propriétés d'adhésivité, on met en oeuvre une feuille dont le support est réalisé en une matière plastique présentant une propriété de déformabilité à l'extension, destinée à être utilisée en tant que matériau d'habillage, cette feuille ayant une de ses faces revêtue d'un vernis thermocollant. Sur une pièce en matière plastique se présentant déjà sous sa forme définitive, on dépose alors une telle feuille composite et on procède à une opération de thermoformage de la feuille d'habillage. Au lieu d'utiliser la pièce déjà conformée, on peut déposer sur une plaque en un matériau constitutif de la pièce à fabriquer la feuille composite selon l'invention et soumettre l'ensemble à un processus de thermoformage.

Dans la description qui suit, faite à titre d'exemple, on se réfère aux dessins annexés, dans lesquels :

- la figure 1 est une vue schématique en coupe d'une feuille composite à échelle agrandie;

- la figure 2 est une vue en plan d'un support;

- la figure 3 est une vue en coupe d'un objet comprenant une feuille composite, certaines dimensions ayant été exagérées pour la compréhension;

- la figure 4 est une vue du même objet mais après formage;

- la figure 5 est une vue d'un objet muni de feuilles composites;

- la figure 6 est une vue d'une autre feuille composite;

- la figure 7 est une vue d'encore une autre feuille composite;

- la figure 8 est une vue schématique en coupe, à échelle agrandie, d'une feuille composite selon l'invention qui n'est revêtue d'une couche adhésive que sur une de ses faces;

- la figure 9 est une vue en coupe schématique illustrant une phase d'un procédé d'habillage d'une pièce par une feuille selon l'invention;

- la figure 10 est une vue en coupe schématique illustrant une phase d'un autre procédé d'habillage d'une pièce par une feuille selon l'invention; et

- la figure 11 est une vue en coupe schématique de la pièce selon les figures 9 et 10, habillée après formage.

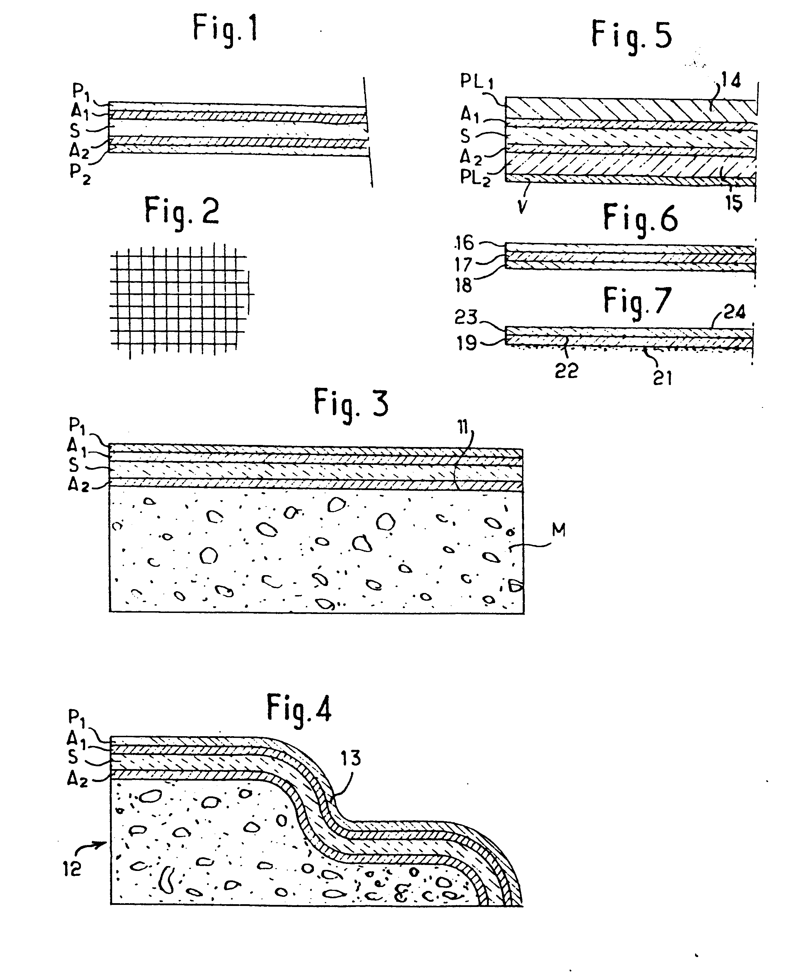

Dans une première variante, une feuille composite selon l'invention comprend un support S (figure 1) déformable revêtu sur une face par une première couche d'adhésif déformable $A_1$ et sur l'autre face par une seconde couche d'adhésif déformable $A_2$. La couche d'adhésif $A_1$ est recouverte par un premier revêtement protecteur $P_1$. Eventuellement, la couche d'adhésif $A_2$ peut être recouverte par un second revêtement protecteur $P_2$.

Par déformabilité, il faut entendre la propriété grâce à laquelle le support S, les couches d'adhésifs $A_1$ et $A_2$ et le protecteur $P_1$ ne subiront pas de déchirures lorsque la feuille sera conformée pour épouser la surface de l'objet qu'elle est destinée à revêtir.

Comme exemples non limitatifs de matières constitutives de support S, on cite : le polyéthylène, le polypropylène, le chlorure de polyvinyle, le polycarbonate, le polyamide, etc...

Le support S peut être une feuille ou un film continu.

Suivant une variante, le support est perforé suivant de petits trous, ce qui permet à l'air emprisonné pendant le contrecollage avec d'autres matières étanches de s'échapper.

Il est constitué avantageusement par des fils ou grilles obtenus par un procédé de fabrication adéquat, comme montré sur la figure 2. Des exemples non limitatifs de la matière constitutive de tels fils ou grilles sont : le polypropylène, le polyéthylène, etc...

Comme exemples non limitatifs d'adhésifs constitutifs de

la couche $A_1$ et de la couche $A_2$, on cite : les polyacryliques, les élastomères naturels et synthétiques, les polymères thermoplastiques, les polymères silicone, etc...

Comme exemples non limitatifs de matières propres à constituer un revêtement protecteur, on cite : le polyéthylène, le polypropylène, le polyamide, le polyester, le polycarbonate, le papier, etc...

Lorsque, comme il est fréquent, la feuille composite S est vendue sous forme de rouleau, c'est un intercalaire siliconé sur l'une et l'autre de ses faces qui joue le rôle des deux revêtements protecteurs $P_1$ et $P_2$.

Après avoir déroulé la longueur de feuille nécessaire, l'utilisateur dispose directement d'une feuille dont une face est adhésive ou devient adhésive, tandis que l'autre face adhésive est revêtue du protecteur permettant sa manipulation.

Une telle feuille est avantageusement utilisable en relation avec des matières thermoformables comme des textiles imprégnés de résines, des textiles contrecollés avec des feuilles de matière thermoformable, des feuilles de matière thermoformable (comme exemples non limitatifs : polypropylène, A.B.S. (copolymère d'acrylonitrile de butadiène et de styrène), mousse de polyvinyle, etc...). Les constituants de la feuille sont alors choisis en fonction de leur thermoformabilité.

Les figures 3 et 4 montrent de façon schématique un exemple d'utilisation d'une telle feuille.

Une feuille ou plaque M en A.B.S. ou en textile thermoformable est contrecollée à une feuille ou film composite selon l'invention, telle que celle représentée sur la figure 1, dont le revêtement protecteur $P_2$ a été enlevé pour permettre le collage. L'ensemble, préalablement découpé aux dimensions adéquates (figure 3), est alors placé dans un moule. On thermoforme soit à l'aide d'un poinçon ou analogue soit en faisant appel au vide ou à la pression pneumatique. On obtient un objet 12 (figure 4) dont au moins une face 13 possède une qualité d'adhésivité qui sera mise à profit ultérieurement.

L'adhésivité de cette face 13 est sans discontinuité, précisément en raison de la capacité de déformation des constituants de la feuille composite.

L'adhésivité de la couche $A_1$ et/ou de la couche $A_2$ est antérieure au formage ou bien en variante est développée par le formage.

L'objet 12 peut être stocké et manipulé jusqu'au moment de son utilisation en raison de la présence du revêtement protecteur $P_1$.

Pour l'utilisation, le revêtement protecteur $P_1$ est enlevé.

Dans la forme de réalisation montrée sur la figure 5, une feuille composite selon l'invention est collée, par sa couche adhésive $A_1$ sur une première plaque $PL_1$. Le revêtement protecteur $P_2$ ayant été enlevé, une seconde plaque $PL_2$ est rendue solidaire de la plaque $PL_1$ par collage grâce à la couche d'adhésif $A_2$. L'ensemble est ensuite thermoformé. Lorsque le thermoformage a lieu par action sur la face externe 14 de la plaque $PL_1$, la face externe 15 de la plaque $PL_2$ peut être munie d'un revêtement ornemental comme un velours V.

Pour cette utilisation, les revêtements protecteurs $P_1$ ou $P_2$, ou l'intercalaire siliconé, n'ont pas besoin d'être en un matériau déformable.

Dans la forme de réalisation montrée sur la figure 6, la feuille composite comprend un support 17 en une pellicule souple comme en polyéthylène ou polypropylène, etc... et est revêtue sur l'une et l'autre de ses faces par un vernis thermocollant, respectivement 16 et 18. Cette réalisation évite la nécessité de revêtements protecteurs ou produit intercalaire siliconé.

Comme exemples non limitatifs de vernis thermocollants utilisables selon l'invention, on cite : des vernis à base d'acrylique, de vinylique, d'E.V.A. (éthylène, acétate de vinyle), de résine polyester soluble, de cire de polyéthylène, etc...).

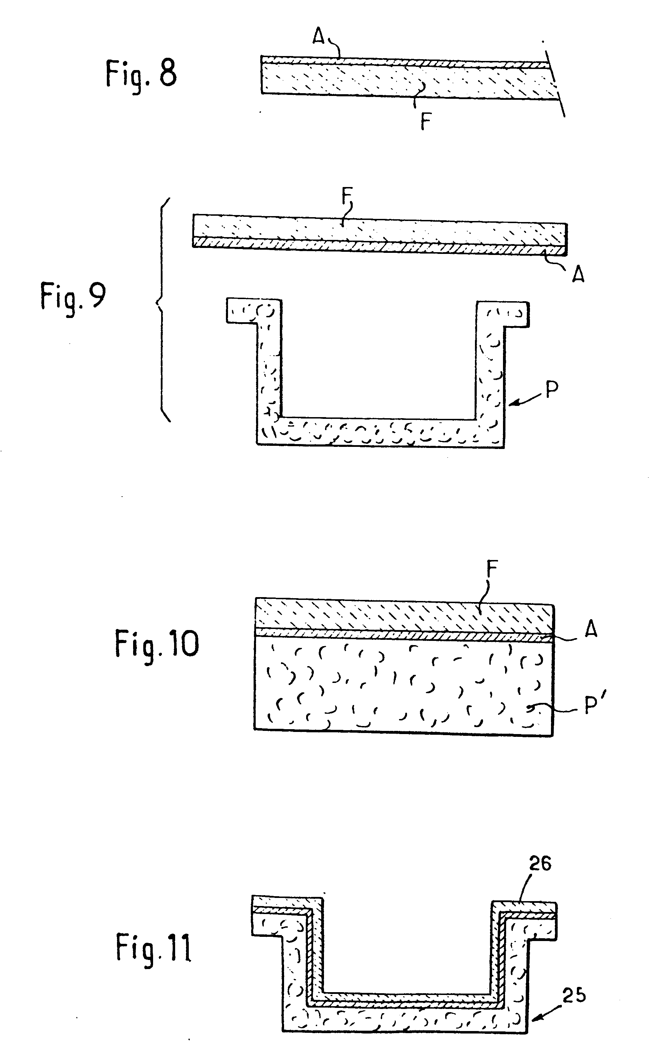

Dans la variante montrée sur la figure 7, la feuille composite comprend un intercalaire 19 propre à être conformé, avantageusement thermoformé, sans apparition de déchirures ou zones d'affaiblissement, un tel intercalaire étant choisi parmi le groupe constitué par le polyéthylène, le polypropylène, le polyamide, le polycarbonate, etc... et sur une face 21 de laquelle est présent un vernis de silicone tandis que l'autre face 22, également siliconée, ou vernie pour être anti-adhérante, reçoit une couche de colle 23. Après application de la feuille composite selon l'invention sur l'objet en ma-

0008971

tière thermoformable par la face adhésive libre 24, puis formage, le détachement de l'intercalaire 19 laisse apparaître l'autre face adhésive de la couche 23.

Selon encore une autre variante, l'invention fournit une feuille composite F (figure 8) réalisée en un matériau déformable destiné à constituer l'habillage d'une pièce en matière plastique. Une de ses faces est revêtue d'une couche adhésive A en un vernis thermocollant c'est-à-dire un vernis dont l'adhésivité se développe à la chaleur. L'autre face, à savoir celle destinée à constituer la face extérieure de la pièce une fois habillée, est non revêtue.

Comme exemples non limitatifs de matières d'habillage constitutives de la feuille F, on cite : le chlorure de polyvinyle (PVC) expansé, PVC grainé, flocké, textile sur film PVC, etc.

Comme exemples non limitatifs de vernis thermocollants, on cite : des vernis à base de résines polyvinyliques, polyacryliques, polyoléfines, polyamides, etc.

Une telle feuille est avantageusement utilisée pour habiller un objet en matière plastique, par exemple un accessoire de voiture automobile tel que tableau de bord, panneau intérieur de portière, etc. Comme exemple non limitatif de matière constitutive de l'objet à habiller, on cite : l'A.B.S. (copolymère d'acrylonitrile de butadiène et de styrène), une résine polyphénylène oxyde connue sous le nom de NORYL, le PVC (chlorure de polyvinyle), un mélange aggloméré de sciure de bois avec de la poudre de polypropylène connu sous le nom de WOODSTOCK, un mélange aggloméré de fibres de cellulose avec de la poudre de polyéthylène connu sous le nom de CARENE, des plaques en fibres de cellulose dénommées FIBRIT, etc...

Dans un premier mode d'exécution de l'habillage d'une telle pièce, on utilise une pièce P présentant déjà la forme requise, telle qu'obtenue par tout procédé approprié, par exemple par moulage, formage, etc., et on dépose une feuille F selon l'invention sur la face à habiller de cette pièce avec sa couche d'adhésif A tournée vers la pièce (figure 9). On procède alors à une opération de thermoformage de la feuille d'habillage sur la pièce et, par cette opération, le vernis constituant la couche adhésive A est activé et fait adhérer la feuille à la pièce. Après cette opération, on obtient un

0008971

objet 25 dont une face 26, destinée à être transparente, est revêtue du matériau d'habillage désiré (figure 11).

Selon un deuxième mode d'exécution du procédé d'habillage d'une pièce en matière plastique au moyen d'une feuille composite selon la figure 8, on pose sur une plaque P' en matière plastique thermoformable (figure 10), par exemple en A.B.S., une feuille F selon l'invention en le matériau d'habillage souhaité, la feuille F étant posée sur la plaque P avec sa couche d'adhésif A tournée vers ladite plaque.

L'ensemble, préalablement découpé aux dimensions adéquates, est alors placé dans un moule de la pièce à fabriquer. On thermoforme, soit à l'aide d'un poinçon ou analogue, soit en faisant appel au vide ou à la pression pneumatique.

On obtient un objet 25 dont la face 26, destinée à être apparente, est revêtue du matériau d'habillage désiré (figure 11).

Le vernis thermocollant constituant l'adhésif A est formulé de façon qu'il soit compatible d'une part avec le matériau constitutif de la feuille d'habillage et, d'autre part, avec le matériau constitutif de la pièce. A cet égard.- et à titre d'exemple -- si la pièce à fabriquer est en A.B.S., et si on utilise comme matériau d'habillage du PVC expansé, le vernis thermocollant est avantageusement un vernis polyvinylique.

L'invention est ici notamment avantageuse en ce qu'elle fournit un matériau d'habillage muni lui-même d'un vernis thermocollant approprié, lequel habillage peut être utilisé directement par les fabricants d'accessoires automobiles.

<u>REVENDICATIONS</u>                    0008971

1. Feuille composite comprenant un support dont au moins une face est revêtue d'une couche adhésive, caractérisée en ce que le support présente une propriété de déformabilité à l'extension lui permettant d'épouser des contours galbés sans que ses qualités soient altérées.

2. Feuille composite selon la revendication 1, caractérisée en ce que les deux faces du support sont revêtues d'une couche adhésive.

3. Feuille composite selon la revendication 1, caractérisée en ce que seule une face du support est revêtue d'une couche adhésive.

4. Feuille composite selon la revendication 2 ou 3, caractérisée en ce que la (ou les) couche(s) adhésive(s) présente(nt) également une déformabilité à l'extension.

5. Feuille composite selon la revendication 2 ou 3, caractérisée en ce qu'au moins une couche adhésive est recouverte d'un revêtement protecteur présentant également une déformabilité à l'extension.

6. Feuille composite selon la revendication 2, caractérisée en ce qu'elle est perforée de petits trous.

7. Feuille composite selon la revendication 2, caractérisée en ce que le support est constitué à partir de pellicules, de fils, de grilles.

8. Feuille composite selon la revendication 2, caractérisée en ce que les pellicules, les fils, les grilles sont en un matériau choisi parmi le groupe constitué par des matières plastiques ayant des propriétés de déformabilité.

9. Feuille composite selon la revendication 5, caractérisée en ce que le revêtement protecteur est un matériau choisi parmi le groupe constitué par le polyéthylène, le polypropylène, le polyamide, le polyester, le polycarbonate, le papier, et analogues.

10. Feuille composite selon la revendication 4, caractérisée en ce que la matière constitutive de la couche adhésive est choisie parmi le groupe comprenant les vernis, les polyacryliques, les élastomères naturels et synthétiques, les polymères thermoplastiques, les polymères silicone.

11. Feuille composite selon la revendication 2 ou 3, caractérisée en ce que les couches de part et d'autre du support sont en un vernis thermocollant.                    0008971

12. Feuille composite selon la revendication 11, caractérisée en ce que le vernis est choisi parmi le groupe comprenant les vernis acryliques, vinyliques, éthylène acétate de vinyle, de résine polyester soluble, de cire de polyéthylène et analogues.

13. Feuille composite selon la revendication 2 ou 3, caractérisée en ce que la (ou les) couches de part et d'autre du support est (sont en un vernis devenant collant par un agent chimique.

14. Feuille composite selon la revendication 1, caractérisée en ce que le support est un intercalaire siliconé sur l'une et l'autre de ses faces, et dont une face est revêtue de la couche adhésive.

15. Feuille composite selon la revendication 3, caractérisée en ce qu'elle est réalisée en un matériau thermoformable d'habillage d'une pièce en matière plastique, sa face opposée à celle destinée à rester apparente et qui constitue l'habillage proprement dit étant revêtue d'une couche de vernis thermocollant.

16. Feuille composite selon la revenfication 15, caractérisée en ce que son matériau constitutif est choisi parmi le groupe comprenant le PVC expansé, le PVC grainé, flocké, le textile sur film PVC.

17. Feuille composite selon la revendication 15, caractérisée en ce que le vernis thermocollant est choisi parmi le groupe comprenant les vernis polyvinyliques, polyacryliques, polyoléfines, polyamides et analogues.

18. Procédé d'utilisation d'une feuille composite selon l'une quelconque des revendications 2 et 4 à 14, caractérisé en ce que la feuille composite sert à rendre adhésives des surfaces complexes ou à assembler différents matériaux destinés à la fabrication de pièces par thermoformage.

19. Procédé de fabrication d'un objet en textile, matière plastique ou analogue, collant sur une de ses faces, caractérisé en ce qu'on part d'un format ou plaque en textile ou matière plastique, en ce qu'on applique sur une des faces dudit format une feuille composite selon l'une quelconque des revendications 2 et 4 à 14 et en ce qu'on soumet le format à un processus de formage.

20. Procédé selon la revendication 19, caractérisé en ce que le processus de formage est un thermoformage.

21. Procédé selon la revendication 20, caractérisé en ce que le thermoformage fait appel à un poinçon ou analogue.

22. Procédé selon la revendication 20, caractérisé en ce que le thermoformage fait appel au vide.

23. Procédé selon la revendication 19, caractérisé en ce qu'après avoir appliqué une feuille composite sur une première plaque on applique sur la face externe collante de la feuille composite une seconde plaque et en ce que l'ensemble est soumis à un processus de formage.

24. Procédé de fabrication d'une pièce en matière plastique dont une face est revêtue d'un matériau d'habillage, caractérisé en ce que, sur la face à habiller de la pièce se présentant déjà sous sa forme définitive, on dépose une feuille composite selon l'une quelconque des revendications 15 à 17 et on procède à une opération de thermoformage de la feuille d'habillage.

25. Procédé selon la revendication 24, caractérisé en ce que le vernis thermocollant appliqué sur la feuille d'habillage est de composition telle qu'il est compatible d'une part avec le matériau constitutif de la feuille d'habillage et d'autre part avec le matériau constitutif de la pièce.

26. Procédé de fabrication d'une pièce en matière plastique dont une face est revêtue d'un matériau d'habillage approprié, caractérisé en ce qu'on dépose sur une plaque en un matériau constitutif de la pièce à fabriquer une feuille composite selon l'une quelconque des revendications 15 à 17 et en ce qu'on soumet l'ensemble à un processus de thermoformage.

27. Procédé selon la revendication 26, caractérisé en ce que le vernis thermocollant présente une composition compatible d'une part avec le matériau de la feuille d'habillage et d'autre part avec le matériau de la pièce à fabriquer.

28. Objet obtenu par la mise en oeuvre du procédé selon l'une quelconque des revendications 19 à 27.

29. Rouleau d'une feuille composite selon l'une quelconque des revendications 1 à 17.

30. Rouleau selon les revendications 2 et 28, caractérisé en ce qu'il comprend un intercalaire non adhésif jouant le rôle de deux revêtements protecteurs sur l'une ou l'autre des faces des spires le constituant.

Fig.1

$P_1$
$A_1$
$S$
$A_2$
$P_2$

Fig. 2

Fig. 5

$PL_1$
$A_1$
$S$
$A_2$
$PL_2$
$V$
14
15

Fig.6

16
17
18

Fig. 7

23
19
22
24
21

Fig. 3

$P_1$
$A_1$
$S$
$A_2$
11
M

Fig.4

$P_1$
$A_1$
$S$
$A_2$
13
12

Fig. 8

Fig. 9

Fig. 10

Fig. 11

Office européen
des brevets

**RAPPORT DE RECHERCHE EUROPEENNE**

| Categorie | DOCUMENTS CONSIDERES COMME PERTINENTS | | CLASSEMENT DE LA DEMANDE (Int. Cl.³) |
|---|---|---|---|
| | Citation du document avec indication. en cas de besoin. des parties pertinentes | Revendication concernee | |
| A | US - A - 3 372 049 (A.N. SCHAFF-HAUSEN)<br>* Les revendications 1,3 et 6 *<br><br>-- | 1,7,9 | C 09 J 7/02<br>C 08 L 101/00 |
| A | DE - A - 2 709 800 (SCHWARZ)<br>* Le brevet entier *<br><br>---- | 1 | |

DOMAINES TECHNIQUES RECHERCHES (Int. Cl.³)

C 09 J 7/02
C 08 L 101/00

CATEGORIE DES DOCUMENTS CITES

X: particulièrement pertinent
A: arriere-plan technologique
O: divulgation non-ecrite
P: document intercalaire
T: théorie ou principe a la base
   de l'invention
E: demande faisant interference
D: document cite dans
   la demande
L: document cite pour d'autres
   raisons

&: membre de la même famille.
   document correspondant

Le present rapport de recherche a ete etabli pour toutes les revendications

| Lieu de la recherche | Date d'achevement de la recherche | Examinateur |
|---|---|---|
| La Haye | 27-11-1979 | DE ROECK |

OEB Form 1503.1   06.78